# EUROPÄISCHE PATENTSCHRIFT

(11) **EP 0 993 248 B1**
(45) Veröffentlichungstag und Bekanntmachung des Hinweises auf die Patenterteilung: **05.03.2003**
(21) Anmeldenummer: 98929276.8
(22) Anmeldetag: 30.04.1998
(51) Int. Cl.: A21C 5/08

(54) **WIRKTELLER FÜR EINE BÄCKEREIMASCHINE**
KNEADING DISK FOR BAKER'S MACHINERY
DISQUE PETRISSEUR POUR MACHINE DE BOULANGERIE

(30) Priorität: 02.07.1997 DE 29711529 U; 02.07.1997 DE 29711528 U
(43) Veröffentlichungstag der Anmeldung: 19.04.2000
(73) Patentinhaber: Karodur-Wirkteller GmbH, 53842 Troisdorf-Oberlar (DE)
(72) Erfinder: SCHMIDT, Karl, Heinz, D-37181 Hardegsen (DE)
(74) Vertreter: Sobisch, Peter, Dipl.-Ing.
(86) Internationale Anmeldenummer: EP9802561
(87) Internationale Veröffentlichungsnummer: WO99001036

(56) Entgegenhaltungen:
- DE-C- 3 529 671
- GB-A- 2 230 999

## Beschreibung

Die Erfindung bezieht sich auf einen Wirkteller entsprechend dem Oberbegriff des Anspruchs 1.

Wirkteller sind beispielsweise aus der DE 35 29 671 C1 bekannt und werden in Messerstern-Teigteil- und -Wirkmaschinen zum Portionieren und/oder Formen, insbesondere zum Rundwirken von Teig benutzt. Sie weisen eine plattenartige Gestalt auf, deren eine Seite zum Teigteilen und Rundwirken und deren andere Seite lediglich zum Teigteilen bestimmt und eingerichtet ist. Erstgenannte Seite ist innerhalb einer kreisförmigen Arbeitsfläche mit einer regelmäßigen Anordnung von Wirknäpfen versehen, wohingegen die dieser gegenüberliegende Arbeitsfläche der anderen Seite glatt ausgestaltet ist. Entlang eines zu der Arbeitsfläche konzentrischen Kreises befindet sich in regelmäßiger Umfangsverteilung eine Reihe von sich beispielsweise radial erstreckenden Nuten, und zwar auf beiden Seiten des Wirktellers. Diese Nuten erfüllen einen mehrfachen Zweck. Sie markieren in der Ebene des Wirktellers die Arbeitsfläche, nämlich den Bereich, der zur Bildung von Rundwirklingen oder Teilportionen von definierter Masse gleichförmig mit Teig zu belegen ist. Sie bilden ferner Entlüftungsnuten und dienen der Vermeidung von Lufteinschlüssen und der hierdurch bedingten ungleichförmigen Masseverteilung des Teiges innerhalb des durch diesen einzunehmenden Raumes.

Zur Durchführung eines Wirkvorgangs wird der auf dem Wirktisch einer solchen Bäckereimaschine fixierte Wirkteller oberseitig innerhalb seiner Arbeitsfläche mit einer definierten Teigmenge belegt, wobei diese Teigmenge anschließend mittels einer, jeweils Teilvolumina bildenden Messeranordnung in Teilmengen zerteilt wird und wobei durch kreisende Bewegungen des Wirktellers, die innerhalb dessen Ebene ablaufen, jede Teilmenge einem Rundwirkvorgang unterzogen wird, der ein Abrollen der Teilmenge an den zugekehrten Wandungen der Messeranordnung zur Folge hat, so daß schließlich ein kugelförmiger Wirkling entsteht. Jedem Teilvolumen ist jeweils ein Wirknapf zugeordnet, wobei aufgrund der innenseitigen Profilierung der Wirknäpfe während der kreisenden Bewegung des Wirktellers eine Mitnahmewirkung auf die jeweiligen Teilmengen des Teiges ausgeübt wird, die sich innerhalb der Teilvolumina befinden.

Diese Teilvolumina sind im Regelfall gleich bemessen, so daß die Bildung von Wirklingen gleicher Größe und Gestalt angestrebt wird. Nachdem jedoch der Radius der kreisenden Bewegung des Wirktellers für sämtliche Teilvolumina gleich ist, ergeben sich geometriebedingte Unterschiede hinsichtlich der durch die Wirknäpfe auf die Teilmengen des Teiges ausgeübten Mitnahmewirkung, welche zu qualitativ unterschiedlichen Arbeitsergebnissen in Abhängigkeit von der Lage des jeweiligen Teilvolumens führen. Dieser Effekt wird im folgenden unter Bezugnahme auf die Zeichnungen noch näher erläutert werden.

Die Wirknäpfe weisen üblicherweise eine Profilierung nach Art mehrerer, stufenweise aufeinanderfolgender und zueinander konzentrischer Ringkanten auf. Um eine Mitnahmewirkung auf die Teilmenge innerhalb des Teilvolumens ausüben zu können, wobei die Teighaut von den Schnittkanten des Teilvolumens zur Innenseite hin zusammengezogen wird, ist ein Eindringen des Ringkantenprofils in die Teigsubstanz erforderlich. Fällt dieses Eindringvermögen unzureichend aus, vermindert sich dementsprechend die auf den Teig ausgeübte Mitnahmewirkung. Erschwert wird die konkrete Gestaltung des Ringkantenprofils unter anderem dadurch, daß der durch den Teilvorgang in Teilvolumina zerschnittene Teig insbesondere bei weichen Teigen im Bereich der Schnittkanten zunächst außerordentlich klebrig ist und dazu tendiert, sich in entsprechend bemessenen Ausnehmungen, Rillen oder dergleichen festzusetzen. Diese Eigenschaft des Teiges macht es erforderlich, scharfe Kanten bzw. spitzwinklige Profilformen im Rahmen der genannten Profilierungen zu vermeiden und diese vergleichsweise flach zu gestalten. Dies wiederum jedoch mindert die Tauglichkeit des Wirktellers zur Behandlung relativ trocken gekneteter Teige, da das Eindringvermögen flacher, stumpf bemessener Profilierungen in diese Teigarten entsprechend vermindert ist, so daß sich die auf den Teig auszuübende Mitnahmewirkung im Rahmen des Wirkvorgangs verschlechtert.

Es ist die Aufgabe der Erfindung einen Wirkteller der eingangs bezeichneten Art mit Hinblick auf eine Vergleichmäßigung des Arbeitsergebnisses sowie eine Erweiterung auf beliebige, nach Art eines Rundwirkvorgangs zu bearbeitende Teige zu erweitern. Gelöst ist diese Aufgabe bei einem solchen Wirkteller durch die Merkmale des Kennzeichnungsteils des Anspruchs 1.

Erfindungswesentlich ist hiernach, daß der Neigungswinkel der Rampenflanke in Abweichung von dem einschlägigen Stand der Technik keinen konstanten Wert aufweist, welches in Anbetracht der herrschenden geometrischen Verhältnisse, insbesondere der sich senkrecht zur Ebene des Wirktellers erstreckenden Ringflanke zu einem stumpfen Querschnittsprofil im Bereich der Ringkante führen würde. Der Neigungswinkel ist demgegenüber erfindungsgemäß vielmehr derart bemessen, daß er ausgehend von einem Flankengrund in Richtung auf die Ringkante hin sich vergrößert und im Bereich der Ringkante ein Maximum erreicht. Dies führt bei ansonsten unverändertem Scheitelabstand zweier Ringkanten zu einer Erhöhung der Ringkante gegenüber dem Flankengrund und zu einem spitzwinkligen schneidenartigen Querschnittsprofil der Ringkante. Dies wiederum hat zur Folge, daß das Eindringvermögen der Ringkante in den Teig und - hiermit zusammenhängend - das von der Ringkante auf den Teig ausübbare Mitnahmevermögen während des Formgebungs- bzw. Rundwirkvorgangs bedeutend verbessert ist. Es ergibt sich auf diesem Wege zwischen zwei Ringkanten gegenüber dem Stand der Technik ein tieferes Profil, wobei jedoch aufgrund des zwischen dem Flankengrund und der sich an diesen anschließende Ringflanke ein abgerundeter Übergangsbereich verbleibt, so daß trotz des tieferen Profils ein Anhaften von Teigresten in diesem Bereich nicht zu befürchten ist. Insgesamt verbessert sich die Eignung des Wirktellers zur Behandlung auch relativ trocken gekneteter Teige, deren Behandlung sich mit herkömmlichen Wirktellern ansonsten schwierig gestalten würde. Bekanntlich soll durch den Rundwirkvorgang die Teighaut des Teigwirklings von den Schnittkanten her zur Innenseite hin zusammengezogen werden, so daß sich in Verbindung mit der-aus den kreisenden Bewegungen des Wirkteller ergebenden Abrollbewegung des Teigwirklings an den Wandungen der Messerelemente der Messeranordnung der Bäckereimaschine ein kugelförmiger Teigwirkling ergibt. Dieser Vorgang ist maßgeblich von dem Eindringvermögen des Wirknapfprofils in die Teigsubstanz und der auf diese ausübbaren Mitnahmewirkung abhängig. Der Verlauf des Neigungswinkels ausgehend von dem Flankengrund bis zu der genannten Ringkante kann - soweit eine globale Zunahme des Winkels in dieser Richtung gegeben ist - im übrigen grundsätzlich beliebig gestaltet sein und beispielsweise unter anderem auch nach Fertigungsgegebenheiten festgelegt werden. Erfindungsgemäß ergibt sich somit eine Profilierung de Wirknapfes, die hinreichend offen ist, so daß ein Festsetzen bzw. Anhaften von Teigresten bei weichen, relativ nassen und klebrigen Teigen unterbunden wird. Die Profilierung weist jedoch auch ein hinreichendes Eindringvermögen auf und ist somit zur Ausübung einer Mitnahmewirkung auch bei festen, trockenen Teigen geeignet. Letztere Eigenschaft wird durch die Gestaltung insbesondere der Ringkanten bereitgestellt.

Die Merkmale der Ansprüche 2 und 3 sind auf grundsätzlich unterschiedliche Varianten der Ausbildung des Flankenwinkels gerichtet. Es handelt sich zum einen um einen stetigen Verlauf, wonach der Neigungswinkel nach Maßgabe einer vorgebbaren Funktion ausgehend von dem Flänkengrund bis hin zur Ringkante stetig zunimmt. Es handelt sich zum anderen um einen Verlauf des Flankenwinkels derart, daß dessen stetiger Verlauf durch diskrete einzelne Abschnitte angenähert wird, wobei im Rahmen eines jeden Abschnitts der Neigungswinkel einen konstanten Verlauf hat. Im einfachsten Fall kann die letztere Ausführungsform dadurch gegeben sein, daß die Rampenflanke aus zwei Abschnitten somit mit zwei unterschiedlichen Neigungswinkeln zusammengesetzt ist, wobei entsprechend obigen Darlegungen der Neigungswinkel des Flankenabschnitts, der der Ringkante benachbart ist, der relativ größere ist. Auf diesem Wege kann jedoch ein stetiger Flankenwinkelverlauf durch eine weitergehendere Unterteilung in einzelne, im Querschnitt geradlinige Abschnitte beliebig angenähert werden.

Erreicht wird durch die schneidenartige Ausbildung des Ringkantenprofils ein erhöhtes Eindringvermögen auch in ansonsten vergleichsweise schwierig zu behandelnde relativ trockene Teigarten.

Die Verteilung der Wirknäpfe eines Wirktellers - in dessen Ebene gesehen - erfolgt in Abstimmung mit den geometrischen Verhältnissen der Messerelemente der Messeranordnung einer Teigteil- und Wirkmaschine derart, daß jedem Teilvolumen der Messeranordnung, insbesondere dessen jeweiliger Grundfläche ein Wirknapf zugeordnet ist. Die Teilvolumina der Messeranordnung sind mit Hinblick auf die Herstellung von kugelförmigen Teigwirklingen gleicher Masse entsprechend gleich ausgebildet, wobei die Umfangswandungen dieser Teilvolumina teilweise radial orientierte ebene Flächen und teilweise in peripherer Richtung orientierte zylindrische Flächen sind. Aus geometrischen Gründen ergeben sich jedoch bedeutende gestaltliche Unterschiede zwischen den Grundflächen der radial innen und denjenigen der radial außen gelegenen Teilvolumina. Nachdem die Bewegungsverhältnisse der Wirknäpfe durch den Radius des Kreises einheitlich für den gesamten Wirkteller festgelegt sind, gemäß welchem während des Formgebungs- bzw. Rundwirkvorgangs der Wirkteller in kreisende Bewegungen versetzt wird, werden durch die Merkmale der Ansprüche 4 und 5 zwei alternative Möglichkeiten aufgezeigt, bei welchen trotz des einheitlichen Bewegungskreises aller Wirknäpfe und trotz der unterschiedlichen Grundflächengeometrie der radial innen und der radial außen gelegenen Teilvolumina, das sich infolge der kreisenden Bewegung der Wirknäpfe einstellende Arbeitsergebnis bei allen Teilvolumina vergleichmäßigt ist. Die hierbei alternativ zum Einsatz kommenden konstruktiven Merkmale sind darauf gerichtet, das Mitnahmevermögen der radial äußeren und der radial inneren Wirknäpfe mit Hinblick auf diese Vergleichmäßigung unterschiedlich zu gestalten, und zwar derart, daß das Mitnahmevermögen bei den radial innen gelegenen Wirknäpfen erhöht wird, da die Grundflächen der radial innen gelegenen Teilvolumina häufig eine global dreieckförmige Gestalt aufweisen. Diese Erhöhung des Mitnahmevermögens kann beispielsweise dadurch geschehen, daß bei gleichen Napfvolumina aller Wirknäpfe die Durchmesserwerte der radial innengelegenen Wirknäpfe größer als diejenigen der radial äußeren Wirknäpfe bemessen werden. Es ergeben sich unter dieser Bedingung radial innenseitig flache und radial außenseitig relativ tiefere Wirknäpfe, wobei die durchmessermäßig größeren Wirknäpfe eine größere Fläche während der kreisenden Bewegung des Wirktellers überstreichen, wobei von den relativ tieferen Wirknäpfen zwar eine geringere Fläche erfaßt wird, wobei jedoch im Vergleich zu den radial inneren Wirknäpfen eine verstärkte Mitnahmewirkung auf das zu behandelnde Teigteilvolumen zu erwarten ist. Das konkrete Ausmaß der radial innenseitigen Durchmessererhöhung gegenüber den radial außenseitigen Wirknäpfen wird praktisch nach Maßgabe eines Kompromisses festgelegt werden, wonach bei gegebenem Radius der kreisenden Bewegung des Wirktellers und bei gegebener Wirkzeit die Einwirkung der Wirknäpfe sowohl radial außen- als auch radial innenseitig auf den Teilwirkling zu gleichen Arbeitsergebnissen führen soll. Eine verschlechterte Mitnahmewirkung kann durch eine erhöhte Wirkzeit ausgeglichen werden, wobei jedoch ein sogenanntes Überwirken gleichermaßen wie ein unzureichendes Wirken vermieden werden müssen. Eine andere Alternative besteht darin, bei gleichen Napfvolumina und gleichen Napfdurchmessern die durch die Bemessung der Neigungswinkel der Wirknäpfe gegebene Eindringfähigkeit in den zu behandelnden Teig radial innen- und radial außenseitig wiederum mit der Maßgabe unterschiedlich zu gestalten, daß sich nach einer bestimmten Wirkzeit innen- und außenseitig ein gleiches Arbeitsergebnis einstellt. Zielgröße der letztgenannten Variante ist somit wiederum die örtlich angepaßte Veränderung der auf den Teig ausübbaren Mitnahmefähigkeit.

Die Merkmale der Ansprüche 6 und 7 sind auf weitere konstruktive Ausgestaltungen gerichtet.

In dem erfindungsgemäßen Wirkteller steht somit ein Arbeitsmittel zur Verfügung, welches auch hinsichtlich seiner Fähigkeit zur Behandlung schwieriger Teigarten und hinsichtlich der Vergleichmäßigung des Arbeitsergebnisses der radial innen- und der radial außenseitigen Wirknäpfe verbessert ist.

Die Erfindung wird im folgenden unter Bezugnahme auf das in den Zeichnungen schematisch wiedergegebene Ausführungsbeispiel näher erläutert werden. Es zeigen:
Fig. 1 eine Draufsicht auf die Oberseite eines erfindungsgemäßen Wirktellers;
Fig. 2 eine teilweise Schnittansicht einer Messerstern-Teigteil- und -Wirkmaschine mit eingesetztem Wirkteller, wobei sich die zur Formgebung und Portionierung von Teig bestimmten Funktionselemente in einer zurückgezogenen Stellung befinden;
Fig. 3 eine teilweise Schnittansicht einer Messerstern-Teigteil- und Wirkmaschine mit eingesetztem Wirkteller, wobei sich die zur Formgebung und Portionierung von Teig bestimmten Funktionselemente in der ausgefahrenen bzw. aktiven Stellung befinden;
Fig. 4 eine vergrößerte Teildarstellung der Messerstern-Teigteil- -und -Wirkmaschine gemäß Fig. 3;
Fig. 5 eine isolierte Darstellung eines konventionellen und eines erfindungsgemäßen Wirknapfes eines Wirktellers im Vertikalschnitt;
Fig. 6 eine schematische Darstellung der der Arbeitsfläche eines Wirktellers zugeordneten Messeranordnung in der Draufsicht;
Fig. 7 eine vergrößerte Teildarstellung der Messeranordnung gemäß Fig. 6.

Zur Erläuterung der Wirkungsweise einer zum Teigteilen und Formgeben, hier Rundwirken bestimmten Bäckereimaschine bzw. Messerstern-Teilteil- und - Wirkmaschine wird im folgenden zunächst auf die Zeichnungsfiguren 1 bis 3 Bezug genommen.

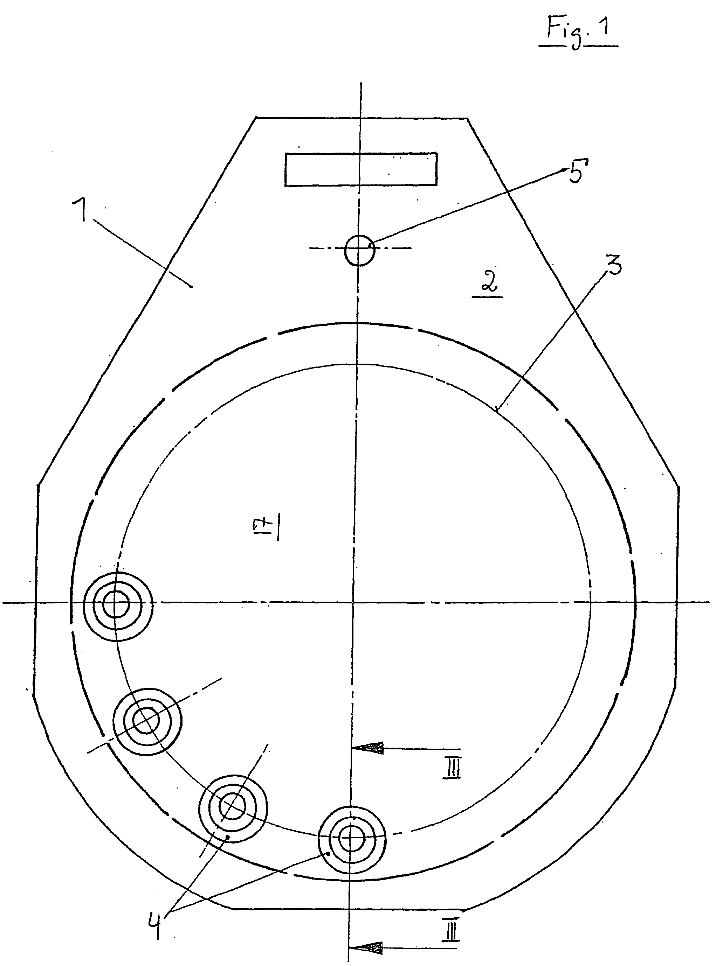

Mit 1 ist in Fig. 1 der Wirkteller in seiner Gesamtheit bezeichnet. Dieser weist eine global ebene Erstreckung auf und ist auf seiner Oberseite 2 entlang mehrerer, zueinander konzentrischer Teilkreise 3 mit einer Anordnung einzelner Wirknäpfe 4 versehen.

Die Gesamtheit der Wirknäpfe 4 bestimmt die Funktions- und Arbeitsfläche des Wirktellers 1, wie im folgenden noch näher erläutert werden wird.

Mit 5 ist eine Bohrung außerhalb der genannten Funktionsfläche bezeichnet, über welche der Wirkteller 1 innerhalb der Bäckereimaschine in seiner Arbeitsposition, in welcher er auf einem Wirktisch 6 aufliegt, fixiert wird. Für diesen Zweck ist der Wirktisch 6 mit einem Anschlag 7 versehen, wobei der Wirkteller 1 mittels eines Haltestiftes 8, der die Bohrung 5 des Wirktellers 1 und eine zu dieser fluchtende Bohrung des Wirktisches 6 durchdringt, eindeutig festgelegt ist.

Die mit Wirknäpfen 4 bestückte Oberseite 2 des Wirktellers 1 ist in an sich bekannter Weise zum Teigteilen und Rundwirken bestimmt, wohingegen die glatte Unterseite 9 lediglich zum Teigteilen bestimmt ist. Beide Vorgänge, nämlich das Wirken und das Teigteilen finden unter Verwendung des Wirktellers 1 in der genannten Bäckereimaschine statt und es wird zur Erläuterung zunächst des Gebrauchs eines Wirktellers 1 zum Teigteilen insbesondere auf die Zeichnungsfigur 2 Bezug genommen.

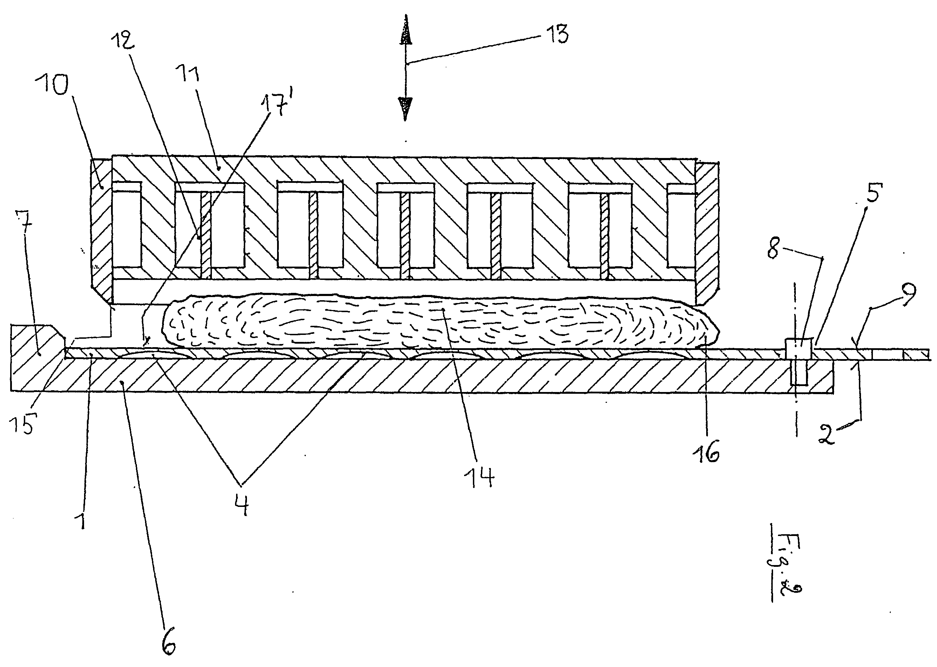

Fig. 2 zeigt den Wirkteller 1, der auf dem Wirktisch 6 in seiner Arbeitsposition mittels des Anschlags 7 und eines die Bohrung 5 und eine zu dieser fluchtende Bohrung des Wirktisches 6 durchdringenden Haltestiftes 8 fixiert ist. Der Wirkteller 1 liegt hierbei entsprechend seiner Zweckbestimmung mit seiner Oberseite 2 auf.

Oberhalb des Wirktellers 1 bzw. des Wirktisches 6 befinden sich die zur Durchführung des Teigteilvorgangs bestimmten und im folgenden zu erläuternden Funktionselemente der Wirkmaschine. Es sind dies ein Teigumfassungsring 10, eine Druckplatte 11 und eine Messeranordnung 12, welch letztere relativ zu der Druckplatte 11 sowie dem Teigumfassungsring 10 in Richtung der Pfeile 13 bewegbar ist.

Sowohl der Wirktisch 6 als auch das System aus Teigumfassungsring 10, Druckplatte 11 und Messeranordnung 12 sind in geeigneter, zeichnerisch nicht wiedergegeberner Weise an Strukturelementen der Wirkmaschine befestigt, und zwar derart, daß der Teigumfassungsring 10 nebst Druckplatte 11 und Messeranordnung 12 zusätzlich als komplette Funktionseinheit in Richtung der Pfeile 13, somit senkrecht zur Ebene des Wirktellers 1 bewegbar sind, wobei ferner der Wirktisch 6 zur Durchführung eines Rundwirkvorgangs in kreisende, in der Ebene des Wirktellers ablaufende Bewegungen versetzbar ist. Auf letzteres wird in der Folge noch näher eingegangen werden.

Zur Durchführung eines Teigteilvorgangs wird der Wirkteller 1 zunächst auf seiner Arbeitsfläche möglichst gleichförmig mit dem zu behandelnden Teig belegt und anschließend auf dem Wirktisch 6 fixiert.

Anschließend wird das System aus Teigumfassungsring 10 nebst Druckplatte 11 und Messeranrodnung 12, welches in Fig. 2 in der zurückgezogenen Stellung gezeigt ist, in Richtung der Pfeile 13 bis auf einen geringfügigen Ringspalt zwischen der Unterkante 15 des Teigumfassungsrings 10 und der zugekehrten Oberfläche des Wirktellers 1 verschoben. In dieser Arbeitsphase bildet sich ein durch die Innenseiten des Teigumfassungsrings 10, die Druckplatte 11 und den Wirkteller 1 umgrenzter Druckraum aus, innerhalb welchem der Teig 14 mittels der Druckplatte 11 zunächst gleichmäßig ausgepreßt und innerhalb des Druckraumes verteilt wird, wobei der Teigkörper anschließend durch Ausfahren der Messeranordnung 12 aus der Druckplatte 11 in Teilportionen zerteilt wird, deren Masse von den durch die Messeranordnung 12 gebildeten Teilvolumina abhängig ist. Diese Teilvolumina weisen sämtlich untereinander gleiche Größen auf, so daß in Abhängigkeit von der Teigeinlage auch Teilportionen von jeweils gleicher Masse gebildet werden.

Die geschilderte Arbeitsweise setzt mit Hinblick auf ein Erreichen reproduzierbarer Teilmassen der Teilportionen eine gleichförmige Füllung des genannten Druckraumes voraus. Somit muß sichergestellt sein, daß einerseits die Gesamtmasse des Teiges 14 dementsprechend gewählt ist und daß diese Gesamtmasse in reproduzierbarer Weise auf der Arbeitsfläche des Wirktellers 1 vor Beginn des Teigteilvorgangs plaziert wird. Ein ungenaues Plazieren wie z.B. in der in Fig. 2 gezeigten Art hätte zur Folge, daß durch den auf den Wirkteller 1 niedergehenden Teigumfassungsring 10 eine Teilmenge 16 abgetrennt würde. Jeder Teig ist begrenzt fließfähig, so daß selbst bei einem ungenauen Plazieren des Teiges auf der Arbeitsfläche durch die Druckplatte 11 diese Ungenauigkeit ausgleichbar ist und es dennoch zur Ausbildung einer gleichförmigen Massenverteilung im Rahmen der genannten Teilportionen kommt. Nach Maßgabe der absoluten Größe der abgetrennten Teilmenge 16 weisen die auf diese Weise gebildeten Teilportionen jedoch eine geringere als die ursprünglich geplante Masse auf. Der Fließfähigkeit des Teiges sind jedoch Grenzen gesetzt, so daß auf diesem Wege nicht jede ungenaue Plazierung ausgleichbar ist.

Die Arbeitsflächen 17 der Oberseite 2 und 17' der Unterseite 9 des Wirktellers 1 werden erfindungsgemäß durch die Verteilung der Wirknäpfe 4 bestimmt.

Wie eingangs bereits ausgeführt, ist der Wirktisch 6 innerhalb seiner Ebene zur Durchführung eines Rundwirkvorgangs in definierte kreisende, im folgenden noch näher zu erläuternde Bewegungen versetzbar. Sowohl der Wirktisch 6 als auch die durch den Teigumfassungsring 10, die Druckplatte 11 und die Messeranordnung 12 bestehende Funktionseinheit sind in zeichnerisch nicht dargestellter Weise in die Rahmenstruktur einer Bäckereimaschine eingebunden, wobei der Bewegung der genannten Funktionseinheit 26, der Bewegung der Messeranordnung 12 gegenüber der Druckplatte 11 und den kreisenden Bewegungen jeweils ein Antrieb zugeordnet ist.

Zeichnerisch nicht dargestellt sind Markierungselemente, welche die Arbeitsflächen 17, 17' sowohl der Oberseite 2 als auch der Unterseite 9 peripher begrenzen, welche Arbeitsflächen von gleicher Größe und deckungsgleich zueinander angeordnet sind.

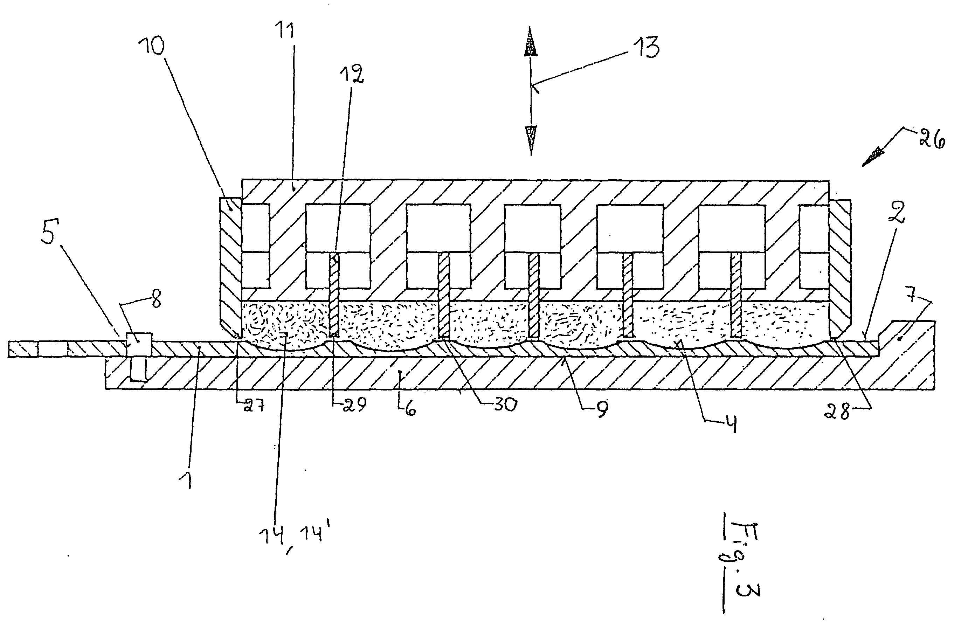

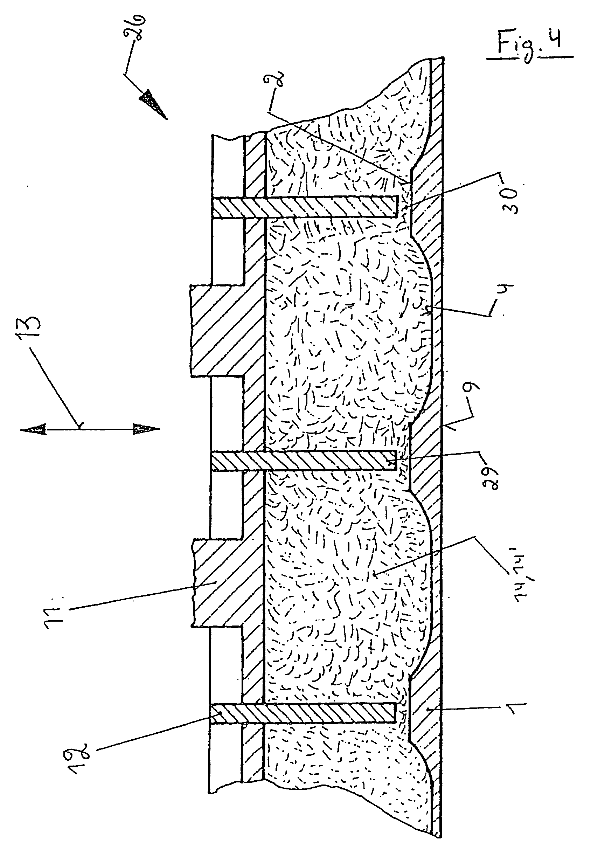

Zur Durchführung eines Teigteil- und Rundwirkvorgangs befindet sich die Funktionseinheit 26 zunächst in der in Fig. 2 gezeigten zurückgezogenen, d.h. entfernt von dem Wirkteller 1 bzw. dem Wirktisch 6 gelegenen Ausgangsstellung und es wird der innerhalb seiner Arbeitsfläche mit einer definierten Teigmasse belegte Wirkteller 1 in der in den Fig. 3 und 4 gezeigten Orientierung auf den Wirktisch 6 gelegt und auf diesem fixiert.

Anschließend wird die Funktionseinheit 26 in Richtung der Pfeile 13 auf den Wirkteller 1 hin verschoben, und zwar so weit, bis zwischen der umlaufenden unteren Ringkante 27 des Teigumfassungsrings 10 und der diesem zugekehrten Oberfläche des Wirktellers 1 lediglich ein geringfügiger Luftspalt 28 verbleibt. Die Messeranordnung 12 befindet sich in dieser Arbeitsphase zunächst noch in einer, in die Struktur der Druckplatte 11 zurückgezogenen Position. Zwischen der Druckplatte 11, den Innenwandungen des Teigumfassungsrings 10 und dem Wirkteller 1 besteht nunmehr ein im wesentlichen zylindrischer Druckraum, innerhalb welchem der Teig 14 gleichförmig verteilt ist. Eine gleichförmige Verteilung der Teigmasse innerhalb dieses Druckraumes wird mittels der Druckplatte 11 erreicht, die relativ zu dem Teigumfassungsring 10 in Richtung der Pfeile 13 verschiebbar ist.

Anschließend wird die Messeranordnung 12 aus der Druckplatte 11 in Richtung auf den Wirkteller 1 hin ausgefahren, und zwar wiederum derart, daß zwischen den Unterkanten 29 der einzelnen Messerelelmente und der zugekehrten Seiten des Wirktellers 1 lediglich geringfügige Luftspalte 30 verbleiben.

Durch das Ausfahren der Messeranordnung 12 ist der Teig 14 nunmehr in Teilportionen 14' unterteilt und es wird nach Abschluß dieses Teigteilvorgangs der Wirktisch 6 und - hiermit zusammenhängend - der Wirkteller 1 in kreisende Bewegungen innerhalb seiner Grundebene versetzt, wobei während dieser Bewegungen die Messeranordnung 12 in der in den Fig. 3 und 4 dargestellten ausgefahrenen Position verharrten. Aufgrund der im folgenden noch genauer zu erläuternden Oberflächengestaltung der Wirknäpfe 4 wird durch diese auf die jeweiligen Teilportionen 14' eine Mitnahmewirkung ausgeübt, infolge welcher die Teighaut von den im Bereich der Messerelemente getrennten Stellen zur Innenseite hingezogen wird und wobei aufgrund eines Abwälzvorgangs der Teilportionen 14' an den Wandungen der Messerelemente bzw. des Teigumfassungsrings im Verlauf dieses Vorgangs aus den Teilportionen 14' kugelartige, einer weiteren Verarbeitung zuführbare Wirklinge entstehen. Diese werden nach Abschluß des Rundwirkvorgangs nach Zurückfahren der Funktionseinheit 26 in Richtung der Pfeile 13 dem Wirkteller 1 für eine weitere Verarbeitung entnommen.

Der Rundwirkvorgang hat neben der Bildung des Wirklings auch ein Abreißen der Teilportionen 14' im Bereich der Luftspalte 30 zur Folge. Wesentlich ist in diesem Zusammenhang, daß die Luftspalte 30 nicht zu groß sind, welches ein Abreißen der Teilportionen 14', insbesondere der radial innen gelegenen Teilvolumina erschweren würde.

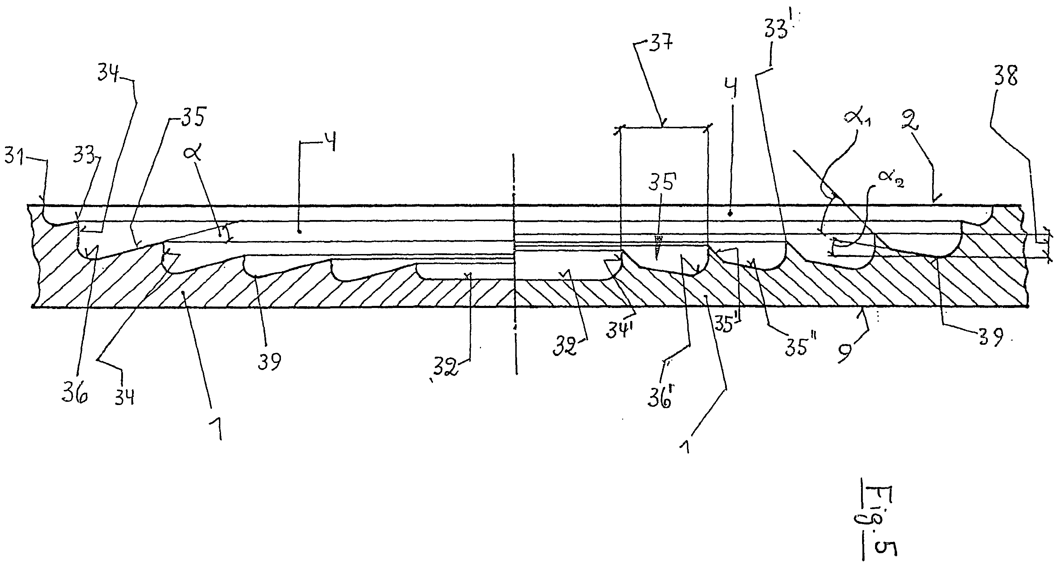

In den Fig. 5 bis 7 sind Funktionselemente, die mit denjenigen der Fig. 1 bis 4 übereinstimmen, entsprechend beziffert, so daß auf eine diesbezügliche wiederholte Beschreibung verzichtet werden kann.

Fig. 5 zeigt in der linken Zeichnungshälfte das Profil eines, dem Stand der Technik zuzuordnenden Wirknapfes 4. Dieses ist ausgehend von der Außenseite 31 bis hin zu einem Zentrum 32 bzw. einem Wirknapfgrund durch eine Anordnung zueinander konzentrischer Ringkanten 33 gekennzeichnet, die stufenweise von der Außenseite 31 aufeinander folgen und bis zum Wirknapfgrund fortgeführt sind.

Auf der dem Zentrum 32 zugekehrten Seite einer Ringkante 33 schließt sich eine, sich senkrecht zur Unterseite 9 erstreckende Ringflanke 34 und auf der der Ringflanke 34 radial gegenüberliegenden Seite der Ringkante 33 eine sich unter einem Winkel α zur Unterseite 9 erstreckende Rampenflanke 35 an, die nach Maßgabe dieses Winkels α in einer, vom dem Zentrum 32 fort orientierten Richtung zur Unterseite 9 hin abfällt. Die Rampenflanke 35 geht unter Zwischenanordnung eines im Rampengrund befindlichen abgerundeten Übergangsbereichs 36 in die sich anschließende Ringflanke 34 über.

Wesentlich für diese bekannte Oberflächengestaltung des Wirknapfes 4 ist der konstante Neigungswinkel α zwischen der Ringkante 33 und dem Übergangsbereich 36.

Durch einen abgerundeten Übergangsbereich 36 zwischen der Ringflanke 34 und der Rampenflanke 35 soll verhindert werden, daß sich im Bereich dieses Rampengrundes 39 Teig festsetzt. Diese Gestaltung des Oberflächenprofils hat jedoch eine verminderte Mitnahmewirkung zur Folge, die der Wirknapf auf die Teigportion 14' auszuüben vermag. Diese Eigenschaft macht sich insbesondere bei relativ trocken gekneteten Teigen bemerkbar, und zwar dahingehend, daß - bedingt durch den relativ stumpfen Winkel zwischen der Ringflanke 34 und der Rampenflanke 35 - das Profil nur unvollkommen in die Substanz der zu formenden Teigteilmenge eindringen kann, so daß das Arbeitsergebnis des Rundwirkens unbefriedigend ist.

Erfindungsgemäß wird - wie die rechte Zeichnungshälfte der Fig. 5 zeigt - das Profil des Wirknapfes 4 dahingehend modifiziert, daß die Rampenflanke 35 in zwei Teilabschnitte unterteilt ist, nämlich einen ersten, sich unmittelbar an die Ringkante 33' anschließenden, unter einem Winkel α₁ zur Unterseite 9 hin sich erstreckenden Abschnitt 35" und einen zweiten, sich an den ersten anschließenden, unter einem Winkel α₂ gegenüber der Unterseite 9 erstreckenden Abschnitt 35". Nachdem der Winkel α₁ größer als der Winkel α₂ bemessen ist, beispielsweise den dreifachen Wert beträgt, ergibt sich bei gegebenem radialem Scheitelabstand 37 zwischen zwei Ringkanten 33' eine dementsprechende Höhe 38 einer Ringkante 33' über dem jeweils zugeordneten Flankengrund 39. Dieser Flankengrund 39 ist wiederum durch einen abgerundeten Abschnitt 36' gekennzeichnet, der in die sich anschließende Ringflanke 34' übergeht, die sich senkrecht oder zumindest angenähert senkrecht zu der Unterseite 9 des Wirkteller 1 erstreckt.

Erreicht wird durch diese Ausgestaltung, daß sich die Ringkante 33' im Verhältnis zu dem dargelegten Stand der Technik wesentlich höher gegenüber dem Flankengrund 39 erhebt. In Verbindung mit einem spitzeren, schneidenartigen Winkel, den der Rampenflankenabschnitt 35' mit der Ringflanke 34' bildet, ergibt sich ein verbessertes Eindringvermögen des Profils auch in vergleichsweise trockene Teigarten und - hiermit zusammenhängend - eine erheblich verbesserte Mitnahmewirkung. Dadurch, daß der Rampenflankenabschnitt 35", der dem Flankengrund 39 benachbart ist, sich unter einem vergleichsweise flachen bzw. spitzen Winkel gegenüber der Unterseite 9 erstreckt, ergibt sich ein vergleichsweise weites Öffnungsprofil zwischen zwei aufeinanderfolgenden Ringflanken 34', welches in Verbindung mit der abgerundeten Ausbildung des Übergangsbereichs 36' ein Festsetzen von Teigresten praktisch nicht zuläßt.

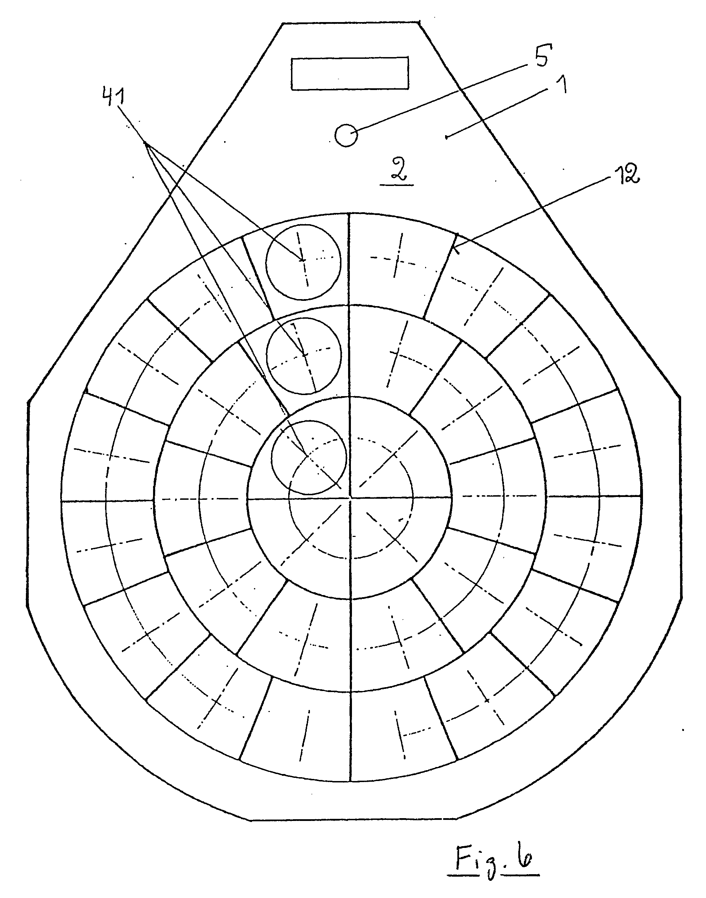

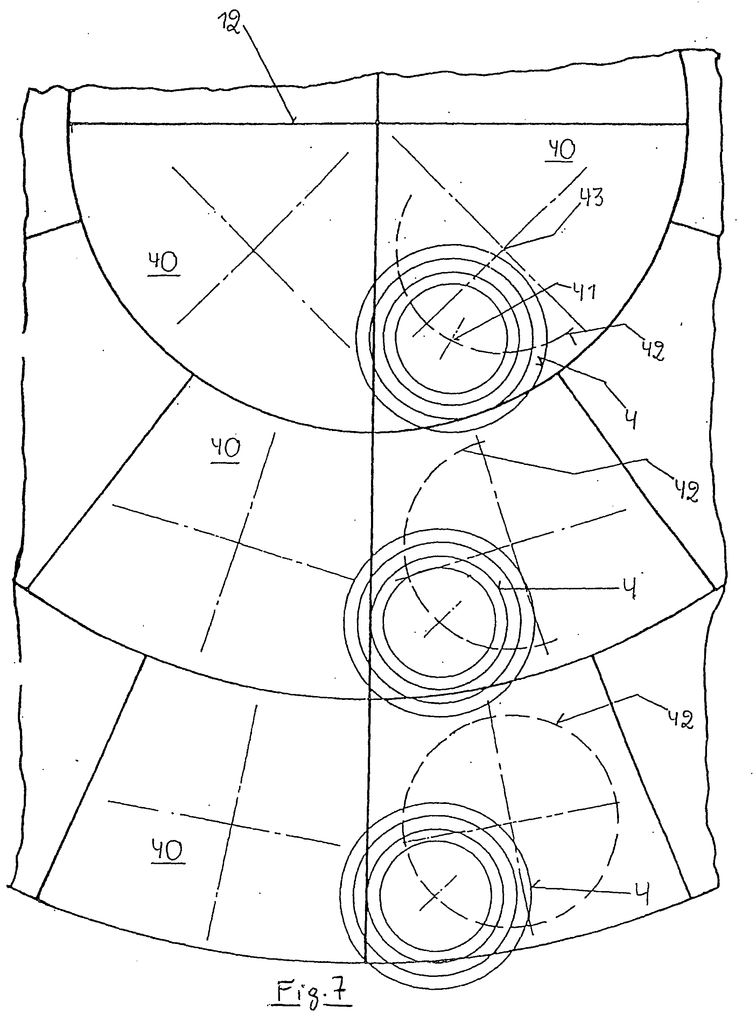

Wie die Fig. 6 und 7 zeigen, werden durch die Messerelemente der Messeranordnung 12 Zellen 40 definiert, insbesondere seitlich begrenzt, die bestimmungsgemäß jeweils gleiche Teilvolumina aufnehmen sollen. Nachdem die Begrenzungen der Zellen zum Teil durch radiale und zum Teil durch periphere zylindrische Wandungselemente gebildet werden, weisen die radial äußersten Zellen eine angenähert quadratische Grundgestalt und die radial innersten Zellen eine angenähert dreieckförmige Grundgestalt auf.

Für den Rundwirk- bzw. Formgebungsvorgang wird - wie eingangs ausgeführt - eine kreisende Bewegung auf den Wirkteller 1 übertragen. Bezogen auf die einzelne Zelle 40 stellt sich diese Bewegung als Bewegung des Mittelpunkts 41 eines Wirknapfes 4 entlang eines Kreises 42 um einen Mittelpunkt 43 dar, der im wesentlichen dem Mittelpunkt der Grundfläche der Zelle entspricht. Der Radius des genannten Kreises 42 ist im Verhältnis zur flächenhaften Erstreckung der Zelle 40 derart bemessen, daß durch die kreisende Bewegung des Wirknapfes der gesamte Bodenbereich der Zelle gleichmäßig erfaßt wird, so daß eine dementsprechend gleichförmige Mitnahmewirkung auf die in der Zelle 40 befindliche Teilportion des Teiges ausgeübt wird.

Nachdem jedoch der Radius des genannten Kreises 42 einheitlich für den gesamten Wirkteller ist, die Geometrie der Flächen der radial äußeren Zellen sich jedoch von denjenigen der radial inneren Zellen deutlich unterscheiden, ergeben sich bei gleich bemessenen Wirknäpfen Unterschiede in der Mitnahmewirkung zwischen den radial äußeren und den radial inneren Zellen 40, so daß sich bei gleicher Einwirkungszeit auf den Teig bzw. Wirkzeit unterschiedliche Arbeitsergebnisse einstellen.

Fig. 7 verdeutlicht diesen Sachverhalt. Man erkennt, daß der entlang des Kreises 42 der radial inneren Zelle 40 umlaufende Wirknapf Eckenbereiche der Grundfläche dieser Zelle 40 überhaupt nicht erfaßt, wohingegen eine Erfassung auch der Eckenbereiche durch den Wirknapf 4 der radial äußeren Zellen problemlos möglich ist.

Dies wirkt sich im Ergebnis auf den Rundwirkvorgang aus und betrifft unter anderem auch den Zeitbedarf zur Formgebung eines kugelförmigen Wirklings. Wird nämlich ein Eckenbereich einer Zelle nicht oder nur unzureichend erfaßt, wird mehr Zeit benötigt, um nach Maßgabe der Konsistenz des zu bearbeitenden Teiges die in den Eckenbereichen der Zellen 40 befindlichen Teiganteile zu erfassen und ebenfalls in den Rundwirkling einzubinden.

Um nunmehr trotz der geometrischen bzw. kinematischen Ungleichheiten des Wirkvorgangs der einzelnen Zellen ein zumindest angenähert qualitativ gleiches Arbeitsergebnis bei allen Zellen einer Messeranordnung 12 zu erreichen, werden erfindungsgemäß die Wirknäpfe nach Maßgabe ihrer radialen Plazierung unterschiedlich ausgestaltet.

Dies kann dadurch geschehen, daß bei über den Wirkteller 1 identischen Wirknapfdurchmessern und Wirknapfvolumina die Ringkanten 33' der radial inneren Wirknäpfe durch dementsprechende Bemessung der Winkel α₁, α₂ eine größere Höhe 38 über den jeweiligen Flankengrund 39 erhalten, so daß in diesem Bereich eine dementsprechend verstärkte Mitnahmewirkung auf den Teig ausgeübt werden kann. Dementsprechend werden die Winkel α₁ und α₂ der radial äußeren Wirknäpfe bei gegebenem Scheitelabstand 37 dahingehend bemessen, daß die Werte der Höhen 38 relativ geringer ausfallen, daß durch die Ringkanten 33' gebildete Ringkantenprofil flacher ausfällt und eine dementsprechend relativ zu den radial inneren Wirknäpfen geringere Mitnahmewirkung entwickelt wird.

Alternativ kann unter der Bedingung eines gleichen Wirknapfvolumens bei allen Wirknäpfen der Wirknapfdurchmesser bei den radial inneren Wirknäpfen größer als bei den radial äußeren Wirknäpfen bemessen werden. Auf diese Weise ergeben sich relativ größere, jedoch flache Wirknäpfe radial innenseitig und relativ kleinere jedoch tiefere Wirknäpfe radial außenseitig. Über diese Bemesssung der Wirknäpfe kann ebenfalls eine Vergleichmäßigung der Mitnahmewirkung zwischen den radial inneren und den radial äußeren Wirknäpfen erreicht werden. Bei gleichen Teigmassen innerhalb der einzelnen Zellen können auf diesem Wege trotz unterschiedlicher geometrischer Verhältnisse Rundwirklinge von gleicher Qualität hergestellt werden.

## Patentansprüche

1. Wirkteller (1) für eine Bäckereimaschine mit einem plattenartigen Grundkörper, dessen Ober- (2) und dessen Unterseite (9) jeweils eine Arbeitsfläche (17,17') zur Behandlung von Teig (14), insbesondere zur Formgebung und zur Portionierung aufweisen, wobei die zur Formgebung bestimmte oberseitige Arbeitsfläche (17) mit einer Anordnung von Wirknäpfen (4) und die dieser unterseitig gegenüberliegende Arbeitsfläche (17') glatt ausgebildet ist, wobei die ober- und unterseitigen Arbeitsflächen (17,17') eine gleiche Größe aufweisen und deckungsgleich zueinander angeordnet sind, wobei ferner jeder Wirknapf (4) eine Anordnung zueinander konzentrischer Ringkanten (33,33') aufweist, die stufenweise ausgehend von seiner Außenseite (31) bis zu einem zentralen Wirknapfgrund hin aufeinander folgen und wobei sich an jede Ringkante (33,33') eine sich senkrecht oder nahezu senkrecht zur Ebene der Oberseite (9) des Wirktellers (1) erstreckende Ringflanke (34,34') und eine in Richtung zur Außenseite (31) hin abfallende Rampenflanke (35) anschließen,
**dadurch gekennzeichnet,**
- **daß** bei unverändertem Scheitelabstand (37) zweier benachbarter Ringkanten (33') der Neigungswinkel (α) einer Rampenflanke (35) im Bereich der Ringkante (33') gegenüber einem Anfangswert im Rampengrund (39) vergrößert ist, so daß die Höhe (38) der Ringkante (33') gegenüber dem Rampengrund (39) nach Maßgabe dieser Vergrößerung des Neigungswinkels (α) erhöht ist und die Rampenflanke (35) mit der angrenzenden Ringflanke (34') ein schneidenartiges, spitzwinkliges Querschnittsprofil erhält.

2. Wirkteller (1) nach Anspruch 1,
**dadurch gekennzeichnet,**
- **daß** die Rampenflanken (35) aus wenigstens zwei, ausgehend von dem Rampengrund (39) bis zu der zugeordneten Ringkante (33') aufeinanderfolgenden Flankenabschnitten (35',35") zusammengesetzt sind,
- **daß** jeder Flankenabschnitt (35',35") einen konstanten Neigungswinkel aufweist und
- **daß** die Neigungswinkel (α1,α2) zweier aufeinanderfolgender Flankenabschnitte (35',35") jeweils dahingehend bemessen sind, daß der Neigungswinkel (α1) des der Ringkante (33') zugekehrten Flankenabschnitts (35') größer bemessen ist als der Neigungswinkel (α2) des sich in Richtung auf den Rampengrund (39) hin anschließenden Flankenabschnitts (35").

3. Wirkteller (1) nach Anspruch 1,
**dadurch gekennzeichnet,**
- **daß** der Neigungswinkel (α) der Rampenflanke (35) ausgehend von dem Rampengrund (39) bis zu der zugeordneten Ringkante (33') einen stetig zunehmenden Verlauf aufweist.

4. Wirkteller (1) nach einem der Ansprüche 1 bis 3,
**dadurch gekennzeichnet,**
- **daß** die Napfvolumina aller Wirknäpfe (4) gleich bemessen sind, und
- **daß** die Durchmesser der Wirknäpfe (4) mit der Maßgabe unterschiedlich sind, daß mit Hinblick auf eine Vergleichmäßigung des Formgebungsvermögens bezüglich der infolge eines Teigteilvorgangs gebildeten Teilmengen des Teiges (14) entsprechend den unterschiedlichen Grundflächengeometrien der Teilmengen die Durchmesser der den radial inneren Teilmengen zugeordneten Wirknäpfe (4) größer bemessen sind als diejenigen der den radial äußeren Teilmengen zugeordneten Wirknäpfe (4).

5. Wirkteller (1) nach einem der Ansprüche 1 bis 3,
**dadurch gekennzeichnet,**
- **daß** die Napfvolumina und die Durchmesser aller Wirknäpfe (7) gleich bemessen sind und
- **daß** mit Hinblick auf eine Vergleichmäßigung des Formgebungsvermögens bezüglich der infolge eines Teigteilvorgangs gebildeten Teilmengen des Teiges die Neigungswinkel (α) der den radial inneren Teilmengen zugeordneten Wirknäpfe (4) größer bemessen sind als diejenigen der den radial äußeren Teilmengen zugeordneten Wirknäpfe (4), so daß demzufolge die Höhen (38) der Ringkanten (33') der radial inneren Wirknäpfe (4) größer bemessen sind als die Höhen (38) der Ringkanten (33') der radial äußeren Wirknäpfe.

6. Wirkteller (1) nach einem der Ansprüche 1 bis 5,
**dadurch gekennzeichnet,**
- **daß** der Verlauf des Neigungswinkels (α) aller Rampenflanken (35) eines Wirknapfes (4) gleich bemessen ist.

7. Wirkteller (1) nach einem der Ansprüche 1 bis 4 oder 6,
**dadurch gekennzeichnet,**
- **daß** der Verlauf des Neigungswinkels (α) der Rampenflanken (35) aller Wirknäpfe (4) eines Wirktellers (1) gleich bemessen ist.

## Claims

1. Forming plate (1) for a bakery machine, comprising a plate-like base member whose upper surface (2) and lower surface (9) each have a working surface area (17, 17') for the handling of dough (14), particularly for the shaping and the portioning of dough, wherein the working surface area (17) on the upper surface intended for the shaping is provided with an array of forming bowls (4) and the opposite working surface area (17') on the lower surface is smooth, wherein the upper and lower surface working areas (17, 17') are of equal size and are arranged to be in register with one another, wherein additionally each forming bowl (4) comprises an arrangement of mutually concentric annular edges (33, 33') which follow sequentially in step-wise manner from its outside (31) to a central bottom of the forming bowl, and wherein adjacent to each annular edge (33, 33') are provided an annular flank (34, 34'), extending perpendicular or substantially perpendicular to the plane of the upper surface (9) of the forming plate (1), and a ramp flank (35) which falls away in the direction towards the outside (31),
**characterised in that**
- in the case of an unchanged pitch spacing (37) between two adjacent annular edges (33') the angle of inclination (α) of a ramp flank (35) in the region of the annular edge (33') is increased as compared with an initial value at the ramp base (39), so that the height (38) of the annular edge (33') relative to the ramp base (39) is increased in accordance with this increase in the angle of inclination (α) and the ramp flank (35) defines with the adjoining annular flank (34') a knife-like sharp-angled cross-sectional profile.

2. Forming plate (1) as claimed in Claim 1,
**characterised in that**
- the ramp flanks (35) are composed of at least two successive flank sections (35', 35") starting from the ramp base (39) to the associated annular edge (33'),
- each flank section (35', 35") has a constant angle of inclination, and
- the angles of inclination (α1, α2) of two successive ramp sections (35', 35") are respectively dimensioned so that the angle of inclination (α1) of the flank section (35') facing the annular edge (33') is greater than the angle of inclination (α2) of the flank section (35") which follows it in the direction towards the ramp base (39).

3. Forming plate (1) as claimed in Claim 1,
**characterised in that**
- the angle of inclination (α) of the ramp flank (35) has a steadily increasing course starting from the ramp base (39) up to the associated annular edge (33').

4. Forming plate (1) as claimed in any one of Claims 1 to 3,
**characterised in that**
- the bowl volume of all forming bowls (4) is identical, and
- the diameters of the forming bowls (4) are different, **in that** with a view to achieving comparability of the shaping of the portions of the dough (14) formed as a result of a dough portioning process, and in accordance with the different base surface dimensions of the dough portions, the diameters of the forming bowls (4) associated with the radially inner dough portions are greater than the diameters of the forming bowls (4) associated with the radially outer dough portions.

5. Forming plate (1) as claimed in any one of Claims 1 to 3,
**characterised in that**
- the bowl volumes and the diameters of all forming bowls (7) are identical, and
- with a view to achieving comparability of the shaping of the portions of the dough formed as a result of a dough portioning process, the angles of inclination (α) of the forming bowls (4) associated with the radially inner dough portions are greater than the angles of inclination of the forming bowls (4) associated with the radialty outer dough portions, so that consequently the heights (38) of the annular edges (33') of the radially inner forming bowls (4) are greater than the heights (38) of the annular edges (33') of the radially outer forming bowls.

6. Forming plate (1) as claimed in any one of Claims 1 to 5,
**characterised in that**
- the course of the angle of inclination (α) of all ramp flanks (35) of a forming bowl (4) is identical.

7. Forming plate (1) as claimed in any one of Claims 1 to 4 or 6,
**characterised in that**
- the course of the angle of inclination (α) of the ramp flanks (35) of all forming bowls (4) of a torming plate to is identical.

## Revendications

1. Plateau de pétrissage (1) pour une machine de boulangerie avec un corps de base en forme de plateau, dont les faces supérieure (2) et inférieure (9) présentent chacune une surface de travail (17, 17') pour le traitement de pâte (14), notamment pour le formage et le découpage en portions, la surface de travail supérieure (17) destinée au formage étant pourvue d'une disposition de cuvettes de pétrissage (4) et la surface de travail inférieure (17') étant lisse, les surfaces de travail (17, 17') supérieure et inférieure étant de même grandeur et exactement superposées, chaque cuvette de pétrissage (4) présentant en outre une disposition d'arêtes annulaires (33, 33') concentriques qui se succèdent en gradins à partir de son bord extérieur (31) jusqu'à un fond de cuvette de pétrissage central, et chaque arête annulaire (33, 33') se raccordant à un flanc annulaire (34, 34') perpendiculaire ou presque perpendiculaire au plan de la face supérieure (9) du plateau de pétrissage (1) et à un flanc incliné (35) s'abaissant en direction du bord extérieur (31),
**caractérisé en ce que** lorsque la distance entre les sommets (37) de deux arêtes annulaires (33') voisines est inchangée, l'angle d'inclinaison (α) d'un flanc incliné (35) est augmenté au niveau de l'arête annulaire (33') par rapport à une valeur de départ à la base du plan incliné (39), de telle sorte que la hauteur (38) de l'arête annulaire (33') par rapport à la base du plan incliné (39) soit augmentée en fonction de cette augmentation de l'angle d'inclinaison (α), et le flanc incliné (35) avec le flanc annulaire (34') contigu a un profil en section en angle aigu semblable à une lame.

2. Plateau de pétrissage (1) selon la revendication 1, **caractérisé en ce que**
- les flancs inclinés (35) se composent d'au moins deux parties de flanc incliné (35', 35") qui se succèdent à partir de la base du plan incliné (39) jusqu'à l'arête annulaire (33') correspondante,
- **en ce que** chaque partie de flanc incliné (35', 35") présente un angle d'inclinaison constant, et
- **en ce que** les angles d'inclinaison (α1, α2) de deux parties de flanc incliné (35', 35") successives sont tels que l'angle d'inclinaison (α1) de la partie de flanc incliné (35') orientée vers l'arête annulaire (33') est plus grand que l'angle d'inclinaison (α2) de la partie de flanc incliné (35") qui lui fait suite en direction de la base du plan incliné (39).

3. Plateau de pétrissage (1) selon la revendication 1, **caractérisé en ce que** l'angle d'inclinaison (α) du flanc incliné (35) augmente de façon continue de la base du plan incliné (39) à l'arête annulaire (33') correspondante.

4. Plateau de pétrissage selon l'une ou l'ensemble des revendications 1 à 3, **caractérisé en ce que**
- toutes les cuvettes de pétrissage (4) ont le même volume, et
- **en ce que** les diamètres des cuvettes de pétrissage (4) sont différents, de telle sorte qu'en vue d'une uniformisation de la capacité de formage pour des quantités partielles de pâte (14) formées par une opération de division de la pâte, en fonction des différences de géométrie des surfaces de base des quantités partielles, les diamètres des cuvettes de pétrissage (4) associées aux quantités partielles intérieures dans le sens radial soient plus grands que ceux des cuvettes de pétrissage (4) associées aux quantités partielles extérieures dans le sens radial.

5. Plateau de pétrissage (1) selon l'une ou l'ensemble des revendications 1 à 3, **caractérisé en ce que**
- le volume des cuvettes et le diamètre de toutes les cuvettes de pétrissage (7) est le même et
- **en ce qu'**en vue d'une uniformisation de la capacité de formage pour des quantités partielles de pâte formées par une opération de division de la pâte, l'angle d'inclinaison (α) des cuvettes de pétrissage (4) associées aux quantités partielles intérieures dans le sens radial est plus grand que celui des cuvettes de pétrissage (4) associées aux quantités partielles extérieures dans le sens radial, de telle sorte que la hauteur (38) des arêtes annulaires (33') des cuvettes de pétrissage (4) intérieures dans le sens radial soit plus grande que la hauteur (38) des arêtes annulaires (33') des cuvettes de pétrissage extérieures dans le sens radial.

6. Plateau de pétrissage (1) selon l'une ou l'ensemble des revendications 1 à 5, **caractérisé en ce que** l'angle d'inclinaison (α) des flancs inclinés (35) évolue de la même manière pour toutes les cuvettes de pétrissage (4) d'un plateau de pétrissage.

7. Plateau de pétrissage (1) selon l'une ou l'ensemble des revendications 1 à 4 ou 6, **caractérisé en ce que** l'angle d'inclinaison (α) des flancs inclinés (35) évolue de la même manière pour toutes les cuvettes de pétrissage (4) d'un plateau de pétrissage (1).
